# EUROPEAN PATENT APPLICATION

(11) **EP 4 418 339 A1**
(43) Date of publication of application: **21.08.2024**
(21) Application number: 22947458.0
(22) Date of filing: 28.06.2022
(51) Int. Cl.: H01M 4/04, H01M 4/13

(54) **POLE PIECE MANUFACTURING METHOD FOR LITHIUM ION BATTERY WITH EMBEDDED TAB STRUCTURE**

(30) Priority: 23.06.2022 CN 202210716743
(71) Applicant: Tianjin Juyuan New Energy Technology Co.,Ltd., Tianjin 300384 (CN)
(72) Inventor: JIA, Xueheng, Tianjin 300384 (CN); LI, He, Tianjin 300384 (CN); ZHANG, Hongfang, Tianjin 300384 (CN); KANG, Donghui, Tianjin 300384 (CN); LIN, Yinghui, Tianjin 300384 (CN); ZHANG, Wei, Tianjin 300384 (CN); JIN, Huixin, Tianjin 300384 (CN); MAN, Yanyan, Tianjin 300384 (CN)
(74) Representative: Lermer, Christoph
(86) International application number: PCT/CN2022/101809
(87) International publication number: WO 2023/245693

(57) **Abstract**

A method for manufacturing an electrode plate of a lithium-ion battery includes: removing electrode active substances from a tab receiving groove of a metal current collector using a first laser cleaning, removing electrode active substances from an anticipated residual area of active substances and an adjacent area of the anticipated residual area of active substances using a second laser cleaning, and measuring a thickness of an electrode plate in a corresponding area to determine an amount of removed active substances; pressing the electrode plate, whereby the electrode active substances of the anticipated residual area of active substances and the adjacent area of the anticipated residual area of active substances are fluffy; cutting a boundary between the anticipated residual area of active substances and the adjacent area thereof; and removing the electrode active substances of the anticipated residual area of active substances by a roller brush.

## Description

### CROSS-REFERENCE TO RELATED APPLICATIONS

This application is a continuation-in-part of International Patent Application No. PCT/CN2022/101809 with an international filing date of Jun. 28, 2022, designating the United States, now pending, further claims foreign priority benefits to Chinese Patent Application No. 202210716743.3 filed Jun. 23, 2022. The contents of all of the aforementioned applications, including any intervening amendments thereto, are incorporated herein by reference. Inquiries from the public to applicants or assignees concerning this document or the related applications should be directed to: Matthias Scholl P.C., Attn.: Dr. Matthias Scholl Esq., 245 First Street, 18th Floor, Cambridge, MA 02142.

### BACKGROUND

The disclosure relates to a method for manufacturing an electrode plate of a tab-buried lithium-ion battery.

The general process of processing the electrode plate of lithium-ion batteries with buried tab includes: coating with active substances, powder removal (grooving), rolling, cutting, and notching. The powder removal is often achieved through laser, foam adhesive or scraping operation. The powder removal procedure is to remove some active substances on the surface of the electrode plate while still retaining the metal current collector. The operation that removes electrode active substances is generally referred to as "grooving". The "groove" on the metal current collector is used for welding the tab. The powder removal of the cathode electrode is completed before pressing the electrode plate, so, in the rolling process, the thickness of the groove of the metal current collector is much lower than the thickness of the surrounding active substance of the electrode plate, so that the ductility of the groove is lower than that of the surrounding part of the electrode plate, and the difference in ductility results in the formation of stress at the junction of the groove and the active substance of the electrode plate. During cutting of the electrode plate, the breakage occurs frequently at the stressful junction, leading to the production impossible. To avoid the breakage, the cutting is performed along the electrode plate in the vicinity of the groove, which results in the residual powder of a certain width next to the groove. When welding the tab, the "residual powder" will overlap with the tab, causing the local thickness of the overlapped position to be thicker, which directly affects the overall thickness of the battery and reduces the energy density. Meanwhile, lithium precipitation is prone to occur in the overlapped area during the use of the battery, which reduces the safety of the battery.

To solve the above problem, a die-cut notch is developed in the residual powder area of the electrode plate to remove the residual powder thus preventing the residual powder from overlapping with the tab. However, while removing residual powder to create the die-cut notch, the metal current collector is partly removed. The part of the metal current collector is located at the tab, which carries a higher current density than the metal current collector in other parts of the electrode plate. This will increase the current density of the battery during high current charging and discharging, and reduce the safety of the battery during high current charging and discharging. In addition, the die-cut notch causes a decrease in the weldable area of the tab, thus reducing the reliability of the tab welding.

### SUMMARY

The disclosure provides a method for manufacturing an electrode plate of a tab-buried lithium-ion battery, the method comprising:
removing electrode active substances from a tab receiving groove of a metal current collector using a first laser cleaning, removing electrode active substances from an anticipated residual area of active substances and an adjacent area of the anticipated residual area of active substances using a second laser cleaning, wherein a scanning power of the second laser cleaning is 30-80% that of the first laser cleaning, and measuring a thickness of an electrode plate in a corresponding area to determine an amount of removed active substances, wherein 30-80% of the electrode active substances of the anticipated residual area of active substances and the adjacent area are removed;
pressing the electrode plate, whereby the electrode active substances of the anticipated residual area of active substances and the adjacent area of the anticipated residual area of active substances are fluffy;
cutting a boundary between the anticipated residual area of active substances and the adjacent area of the anticipated residual area of active substances;
removing the electrode active substances of the anticipated residual area of active substances by a roller brush with a rolling speed 100-200 rpm for 3-5 seconds, wherein a pressure of the roller brush on the electrode plate is 0-20 N; and
welding a tab on the electrode plate, applying an adhesive tape to the electrode plate, cutting the electrode plate and winding the electrode plate with a separator to form a jelly roll, and sealing the jelly roll to form a final battery.

In a class of this embodiment, a length of the anticipated residual area of active substances is 0-5 mm, and a width is equal to a width of the tab receiving groove.

In a class of this embodiment, a length of the adjacent area of the anticipated residual area of active substances is larger than 0.5 mm and less than 3 mm.

In a class of this embodiment, a width of the roller brush is 60-120% of a width of the tab receiving groove.

The following advantages are associated with the method of the disclosure. The laser cleaning is performed on the active substances of the anticipated residual area of active substances and its adjacent areas. After laser cleaning, the active substances of the electrode plate remain in a fluffy state, and is easy to be removed through a roller brushing process, without need to process a die-cut notch. This not only prevents the overlapping between the tab and the residual powder, but also avoids the negative impact of the die-cut notch manufactured at the tab receiving groove on the electrode plate and battery.

### BRIEF DESCRIPTION OF THE DRAWINGS

FIG. 1 is a local schematic diagram of a cut electrode plate in accordance with one embodiment of the disclosure;
FIG. 2 is a local schematic diagram of a cut electrode plate comprising a die-cut notch in accordance with one embodiment of the disclosure;
FIG. 3 is a local schematic diagram of a cut electrode plate comprising a welded tab in accordance with one embodiment of the disclosure;
FIG. 4 is a local schematic diagram of a cut electrode plate after powder residues are removed in accordance with one embodiment of the disclosure;
FIG. 5 is another local schematic diagram of a cut electrode plate comprising a welded tab in accordance with one embodiment of the disclosure; and
FIG. 6 is a local schematic diagram of an electrode plate after powder residues are removed in accordance with one embodiment of the disclosure.

In the drawings, the following reference numbers are used: 1. Electrode active substance; 2. Tab receiving groove of metal current collector; 3. Powder residue; 4. Die-cut notch; 5. Metal tab; 6. Welding area of metal tab and metal current collector; 7. Metal current collector; 8. Adjacent area of powder residue area; 9. Anticipated residual area of active substances; 10. Adjacent area of anticipated residual area of active substances; 11. Cutting line of electrode plate; 12. Width of tab receiving groove.

### DETAILED DESCRIPTION

To further illustrate the disclosure, embodiments detailing a method for manufacturing an electrode plate of a tab-buried lithium-ion battery are described below. It should be noted that the following embodiments are intended to describe and not to limit the disclosure.

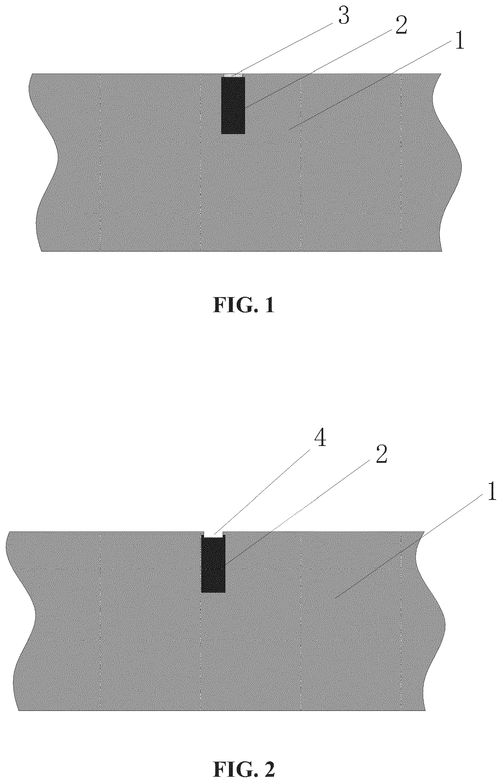

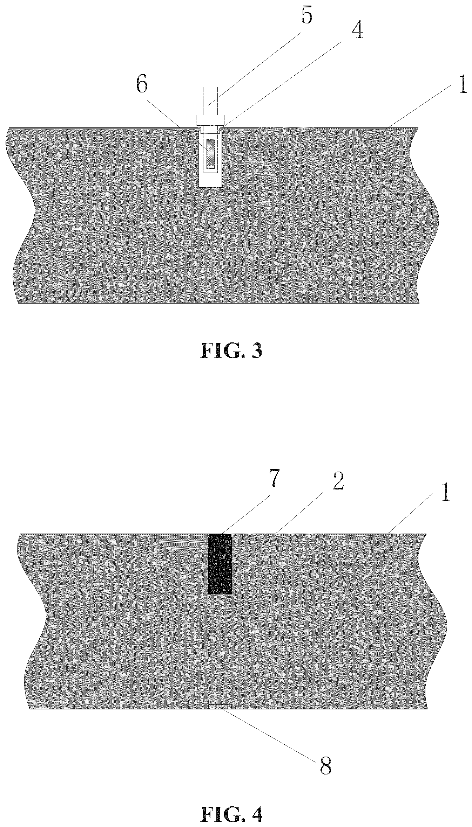

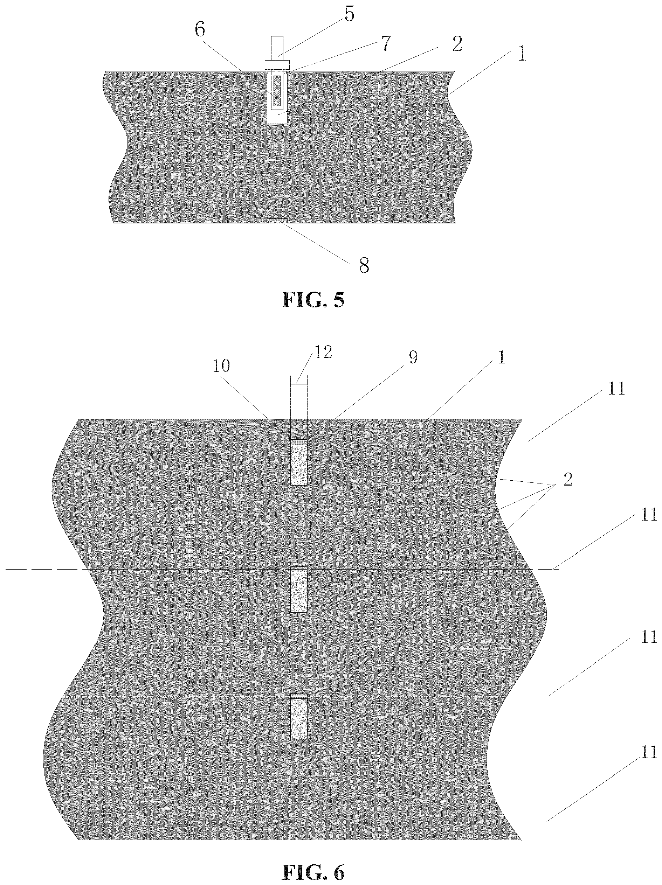

As shown in FIGS. 1-6, the disclosure provides a method for manufacturing an electrode plate of a tab-buried lithium-ion battery, the method comprising:
1) removing electrode active substances 1 from a tab receiving groove 2 of a metal current collector 7 using a first laser cleaning, removing electrode active substances from an anticipated residual area 9 of active substances and an adjacent area 8 of the anticipated residual area of active substances using a second laser cleaning, where a scanning power of the second laser cleaning is 30-80% that of the first laser cleaning, and measuring a thickness of an electrode plate in a corresponding area to determine an amount of removed active substances, where 30-80% of the electrode active substances of the anticipated residual area of active substances and the adjacent area are removed;
2) pressing the electrode plate, whereby the electrode active substances of the anticipated residual area of active substances and the adjacent area of the anticipated residual area of active substances are fluffy;
3) cutting a boundary between the anticipated residual area of active substances and the adjacent area of the anticipated residual area of active substances;
4) removing the electrode active substances of the anticipated residual area of active substances by a roller brush with a rolling speed 100-200 rpm for 3-5 seconds, wherein a pressure of the roller brush on the electrode plate is 0-20 N;
5) welding a tab on the electrode plate, applying an adhesive tape to the electrode plate, cutting the electrode plate and winding the electrode plate with a separator to form a jelly roll, and sealing the jelly roll to form a final battery.

Optionally, the length of the anticipated residual area of active substances is 0-5 mm, and the width is equal to the width of the tab receiving groove.

Optionally, the length of the adjacent area of the anticipated residual area of active substances is larger than 0.5 mm and less than 3 mm.

Optionally, the width of the roller brush is 60-120% of the width of the tab receiving groove.

Specifically, the method of the disclosure is detailed as follows:
1. Laser cleaning was used to remove the powder, and the electrode active substances from a tab receiving groove were removed. At the same time, laser cleaning was also performed on the active substances in the anticipated residual area of active substances and the adjacent area of the anticipated residual area of active substance, but the power was about 50% of the power in the tab receiving groove, and about 50% of the active substances in the anticipated residual area of active substances and the adjacent area thereof were removed. The amount of the removed active substances can be measured by measuring the thickness of the electrode plate of the corresponding area.
2. The electrode plate is rolled. The anticipated active substances in the residual powder area and its adjacent areas are not compressed and are almost not expanded due to the reduced thickness caused by laser cleaning. The stress was concentrated on the boundary between the area not scanned by laser and the laser scanned area and its adjacent area (including tab receiving groove, the anticipated residual area of active substances and the adjacent area thereof).
   Test results showed, when the laser cleaning power of the anticipated residual area of active substances and its adjacent areas is 30-80% of the power of the tab receiving groove, the anticipated residual area of active substances and its adjacent areas are still fluffy after the rolling process, and it is easier to remove the powder residues 3 during subsequent roller brushing.
3. The electrode plate was slit along the boundary between the anticipated residual area of active substances and the adjacent area of the anticipated residual area of active substance. There is almost no stress along the line, so there are hardly tape breaks and the slitting can be performed normally.
4. The electrode active substances of the anticipated residual area of active substances were further removed using a roller brush. Since the electrode plate in the area is basically not compressed in the rolling process, the electrode active substances are still fluffy and easy to remove. The rolling speed was 100-200 rpm for 3-5 seconds, and pressure of the roller brush on the electrode plate is 0-20 N. The width of the roller brush is equal to the width of the tab receiving groove.

Optionally, the length of the anticipated residual area of active substances is 1 mm, which can be as small as possible under the condition that the engineering equipment is workable, in order to reduce the difficulty of the roller brush to remove the powder, and the minimum should be > 0 mm. When the length of the length is > 5 mm, it is not easy for the roller brush to remove the residual powder quickly; the width of the anticipated residual area of active substances can be equal to the width of the tab receiving groove.

Optionally, the length of the adjacent area of the anticipated residual area of active substances is 1 mm, so that the cutting position is at a certain distance from the stress centered area. Testing results show, when the length is less than 0.5 mm, breakage is easy to occur; when the length is greater than 0.5 mm, the cutting point is away from the stress concentration area and not easy to break; the width of the anticipated residual area of active substances is equal to the width of the tab receiving groove.

Optionally, the width of the roller brush is 60-120% of the width of the tab receiving groove, ensuring that the width is greater than the width of the tab. The width should not be too large, otherwise too much powder active substances are removed, thus reducing the capacity of the battery.

It will be obvious to those skilled in the art that changes and modifications may be made, and therefore, the aim in the appended claims is to cover all such changes and modifications.

## Claims

1. A method for manufacturing an electrode plate of a tab-buried lithium-ion battery, the method comprising:
removing electrode active substances from a tab receiving groove of a metal current collector using a first laser cleaning, removing electrode active substances from an anticipated residual area of active substances and an adjacent area of the anticipated residual area of active substances using a second laser cleaning, wherein a scanning power of the second laser cleaning is 30-80% that of the first laser cleaning; and measuring a thickness of an electrode plate in a corresponding area to determine an amount of removed active substances, wherein 30-80% of the electrode active substances of the anticipated residual area of active substances and the adjacent area are removed;
pressing the electrode plate, whereby the electrode active substances of the anticipated residual area of active substances and the adjacent area of the anticipated residual area of active substances are fluffy;
cutting a boundary between the anticipated residual area of active substances and the adjacent area of the anticipated residual area of active substances;
removing the electrode active substances of the anticipated residual area of active substances by a roller brush with a rolling speed 100-200 rpm for 3-5 seconds, wherein a pressure of the roller brush on the electrode plate is 0-20 N; and
welding a tab on the electrode plate, applying an adhesive tape to the electrode plate, cutting the electrode plate and winding the electrode plate with a separator to form a jelly roll, and sealing the jelly roll to form a final battery.

2. The method of claim 1, wherein a length of the anticipated residual area of active substances is 0-5 mm, and a width is equal to a width of the tab receiving groove.

3. The method of claim 1, wherein a length of the adjacent area of the anticipated residual area of active substances is larger than 0.5 mm and less than 3 mm.

4. The method of claim 1, wherein a width of the roller brush is 60-120% of a width of the tab receiving groove.
